# EUROPÄISCHE PATENTSCHRIFT

(11) **EP 1 761 407 B1**
(45) Veröffentlichungstag und Bekanntmachung des Hinweises auf die Patenterteilung: **13.08.2014**
(21) Anmeldenummer: 05750529.9
(22) Anmeldetag: 10.06.2005
(51) Int. Cl.: B60J 11/00

(54) **SCHUTZHAUBE FÜR KRAFTFAHRZEUGE**
PROTECTIVE COVER FOR MOTOR VEHICLES
HOUSSE DE PROTECTION POUR VEHICULES A MOTEUR

(30) Priorität: 24.06.2004 DE 202004009967 U
(43) Veröffentlichungstag der Anmeldung: 14.03.2007
(73) Patentinhaber: Volkswagen Aktiengesellschaft, 38440 Wolfsburg (DE); Aydar, Nalan, 71106 Magstadt (DE)
(72) Erfinder: AYDAR, Nalan, 71101 Schönaich (DE); LEHRMANN, Uwe, 38448 Wolfsburg (DE)
(86) Internationale Anmeldenummer: PCT/EP2005/006234
(87) Internationale Veröffentlichungsnummer: WO 2006/000302

(56) Entgegenhaltungen:
- CA-A1- 2 363 222
- US-A- 4 635 996
- PATENT ABSTRACTS OF JAPAN Bd. 014, Nr. 228 (M-0973), 15. Mai 1990 (1990-05-15) -& JP 02 057446 A (TOKUZO HIROSE), 27. Februar 1990 (1990-02-27)
- PATENT ABSTRACTS OF JAPAN Bd. 014, Nr. 113 (M-0944), 2. März 1990 (1990-03-02) -& JP 01 314676 A (MITSUBISHI MOTORS CORP), 19. Dezember 1989 (1989-12-19)

## Beschreibung

Die vorliegende Erfindung betrifft eine Schutzhaube für Kraftfahrzeuge, Kraftfahrzeugteile oder Maschinen, umfassend eine den Hauptteil des Objektes schützende Umhüllung und mindestens eine Schutzumhüllung für wenigstens ein an dem Objekt beweglich angebrachtes Bauteil.

Derartige Schutzhauben für Kraftfahrzeuge, Maschinen oder dergleichen sind besonders zum präventiven Schutz sowohl der Oberfläche gegen abrasive oder chemische Emission wie beispielsweise Staub, Flugrost, Vogelkot, Kondensations- und Staubnässe und eindringende Nässe als auch gegen mechanische Beschädigungen, wie beispielsweise Kratz- und Schleifschäden und daraus resultierende Schäden bei Stand-, Lager- und Transportzeit vorgesehen.

Die EP 1 061 008 A1 beschreibt eine Schutzumhüllung für ein Kraftfahrzeug, die aus einer Vielzahl von Foliensegmenten besteht, die an Ihren Rändern entlang vorbestimmter Kantenlängen miteinander verbunden sind, wobei die jeweils verbundenen Ränder verschieden geformte Begrenzungen der zugehörigen Foliensegmente bilden, so dass die Schutzumhüllung entsprechend einer Fläche im Raum gebildet ist, deren Form der Karosserleoberfläche des Kraftfahrzeugs entspricht. Diese bekannte Schutzumhüllung umfasst auch Foliensegmente für die Abdeckung beweglicher Anbauteile der Kraftfahrzeugkarosserie, die als Klappsegmente bezeichnet werden. Diese Klappsegmente sind mit benachbarten Foliensegmenten entlang mindestens einer Schnittkante fest und entlang mindestens einer anderen Schnittkante reversibel lösbar verbunden. Diese Klappsegmente werden z. B. im Bereich der Fahrertür oder der Motorhaube verwendet. Als reversible Verschlüsse an den lösbaren Schnittkanten dienen z. B. Reißverschlüsse, Klettverschlüsse oder Druckknopfleisten. Wenn man also z. B. die Motorhaube bei einem mit einer solchen Schutzumhüllung abgedeckten Kraftfahrzeug öffnen will, wird der entsprechende reversible Verschluss, der sich entlang einer Schnittkante erstreckt, geöffnet

Die bei der aus der EP 1 061 008 A1 bekannten Schutzumhüllung verwendeten Klappsegmente für bewegliche Anbauteile wie Fahrertür, Motorhaube, Köfferraumklappe etc. sind entlang mindestens einer Schnittkante fest mit der übrigen Schutzumhüllung für das Kraftfahrzeug verbunden, das heißt sie bilden keine für sich völlig separate Schutzumhüllung. Außerdem ist es für die Betätigung eines der beweglichen Anbauteile, zum Beispiel für das Öffnen der Fahrertür oder der Motorhaube zwingend erforderlich, zunächst den reversiblen Verschluss zu öffnen, um Zugang zum Motorraum oder zum Innenraum des Fahrzeugs zu erhalten. Da diese reversiblen Verschlüsse, beispielsweise Reißverschlüsse, in der Regel mit den entsprechenden Foliensegmenten vernäht sind, kommt es aufgrund der Belastung zum Reißen der Nahtstellen im Bereich der reversiblen Verschlüsse. Außerdem führt der häufigere Gebrauch oft dazu, dass sich Reißverschlüsse verklemmen, insbesondere wenn Teile der Schutzhülle in den Reißverschluss gelangen. Weiterhin ist nachteilig, dass bei geöffnetem Klappsegment Schmutz und Wasser eindringen können.

Ferner ist aus der JP 02057446 eine Abdeckhülle zum Schutz der Oberfläche einer Tür eines Kraftfahrzeugs bekannt. Die Abdeckhülle bedeckt die Tür an ihren umfangseitigen Rändern, wobei sie mit einem Abschnitt versehen ist, der an den Rändern nach innen gebogen ist.

Die Aufgabe der vorliegenden Erfindung besteht somit darin, eine Schutzhaube für Kraftfahrzeuge, Kraftfahrzeugteile oder Maschinen der eingangs genannten Gattung zu schaffen, bei der die Zugänglichkeit in Bereichen mit an dem Objekt angebrachten Bauteilen ohne Betätigung eines reversiblen Verschlusses gegeben ist, wobei gleichzeitig ein effektiver Schutz auch des beweglichen Bauteils möglich ist.

Die Lösung dieser Aufgabe liefert eine Schutzhaube für Kraftfahrzeuge, Kraftfahrzeugteile oder Maschinen der eingangs genannten Gattung mit den kennzeichnenden Merkmalen des Patentanspruchs 1.

Erfindungsgemäß ist vorgesehen, dass die Schutzumhüllung für das bewegliche Bauteil eine von der Umhüllung für den Hauptteil des Objekts separate Schutzumhüllung ist. Die Betätigung eines reversiblen Verschlusses, um den Zugang zu beispielsweise dem Motorraum oder dem Innenraum eines Kraftfahrzeuges zu erhalten, entfällt damit. Es erübrigen sich dadurch auch die vorgenannten Probleme, die sich durch den Gebrauch derartiger reversibler Verschlüsse ergeben. Der Wegfall der reversiblen Verschlüsse führt auch zu einer Kostenersparnis. Die Handhabung zum Beispiel beim Öffnen oder Schließen von Motorhaubenklappen, Fahrzeugtüren und dergleichen wird vereinfacht und es wird Zeit eingespart. Die Betätigung der an dem Objekt beweglich angebrachten Bauteile ist prozesssicher möglich, insbesondere besteht nicht mehr die Gefahr des Einklemmens von Teilen der Schutzhülle im Bereich zum Beispiel eines Reißverschlusses. Die Schutzumhüllung für das bewegliche Bauteil kann, wie dies vorzugsweise vorgesehen ist, das bewegliche Bauteil vollständig oder nahezu vollständig umhüllen, d.h. zum Beispiel bei einer Motorhauben-Klappe auch deren Unterseite oder bei einer Fahrzeugtür die Innenseite der Tür. Dadurch wird im Gegensatz zu der bisherigen bekannten Lösung das Eindringen von Schmutz oder Wasser in sonst nach Öffnen eines reversiblen Verschlusses ungeschützte Bereiche verhindert. Eine Schutzhaube der erfindungsgemäßen Art kann nicht nur als Transportschutz sondern beispielsweise auch als Montageschutz verwendet werden.

Gemäß einer bevorzugten Ausführungsvariante der Erfindung bietet es sich insbesondere an, derartige separate Schutzumhüllungen für Anbauteile des Kraftfahrzeuges zu verwenden, also beispielsweise für Motorhauben-Klappen, Kofferraum-Klappen, Heck-Klappen, Fahrzeugtüren und dergleichen. Dadurch ist deren Betätigbarkeit und somit die Zugänglichkeit der durch diese abgedeckten Fahrzeugbereiche auch bei mit der Schutzhaube versehenem Objekt jederzeit unproblematisch, rasch und beliebig oft möglich. Die Tatsache, dass die separate Schutzumhüllung für das bewegliche Bauteil vorzugsweise keine Verbindung, d.h. weder eine reversibel lösbare Verbindung noch eine feste Verbindung zu der Umhüllung für den Hauptteil des Objekts aufweist, führt auch zu Vereinfachungen bei der Fertigung der Schutzhaube. Separate Schutzumhüllungen für bewegliche Bauteile sind kleiner und damit einfach zu fertigen und können in der Größe und Form einfacher an die entsprechenden beweglichen Bauteile verschiedener Fahrzeugtypen angepasst werden. Arbeitsvorgänge wie zum Beispiel das Vernähen mit anderen Teilen der Schutzhaube entfallen.

Es ist vorgesehen, dass die Schutzumhüllung für das bewegliche Bauteil im montierten Zustand den überwiegenden Teil der Oberfläche des beweglichen Bauteils bedeckt, d.h. zum Beispiel im geschlossenen Zustand des beweglichen Bauteils die Außenseite und vorzugsweise mindestens auch Teile der Innenseite des beweglichen Bauteils, die durch dessen Öffnung zugänglich wird.

Vorzugsweise ist weiterhin vorgesehen, dass die separate Schutzumhüllung mittels wenigstens eines Befestigungselements an dem beweglichen Bauteil festlegbar ist. Zur Anbringung der Schutzumhüllung an dem beweglichen Bauteil kann beispielsweise mindestens ein Gummizug vorgesehen sein. Es kommen ebenso gut andere Befestigungselemente für eine Anbringung der Schutzumhüllung an dem beweglichen Bauteil in Betracht, beispielsweise sind dies Haken, Schnüre, Clips, Ösen oder dergleichen, wobei derartige Teile an dem beweglichen Bauteil anbringbar sein können. Alternativ dazu oder auch zusätzlich kann beispielsweise vorgesehen sein, dass man einen Klettverschluss verwendet, um die Schutzumhüllung an dem beweglichen Bauteil festzulegen. In diesem Fall können Befestigungselemente an dem beweglichen Bauteil seibst, wie Haken, Ösen oder dergleichen entfallen, da die korrespondierenden Verschlusselemente des Klettverschlusses jeweils an der Schutzumhüllung selbst vorgesehen sein können. Die Festlegung der Schutzumhüllung an dem beweglichen Bauteil sollte derart erfolgen, dass dessen Bewegungsfunktion nicht beeinträchtigt wird. Bei der herkömmlichen aus dem Stand der Technik bekannten Lösung ist die Bewegungsfunktion immer erst dann gegeben, wenn zuvor ein reversibler Verschluss geöffnet wurde.

Nachfolgend wird die Erfindung anhand von Ausführungsbeispielen unter Bezugnahme auf die beiliegenden Zeichnungen näher beschrieben. Dabei zeigen
- Fig. 1: eine perspektivische Ansicht eines Kraftfahrzeugs mit einer Schutzhaube;
- Fig. 2: eine entsprechende perspektivische Ansicht des Kraftfahrzeugs mit geöffneter Motorhaube beim Aufziehen der Schutzumhüllung für die Motorhaube.

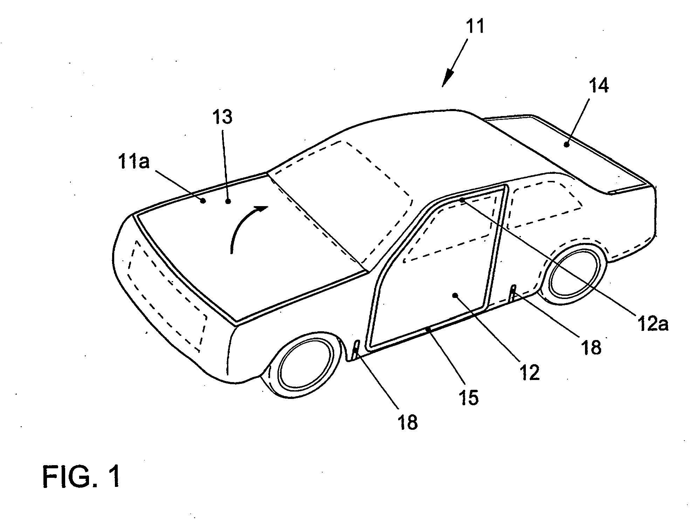

Zunächst wird auf Fig. 1 Bezug genommen. Fig. 1 zeigt eine Schutzhaube 11, die auf ein Kraftfahrzeug aufgezogen ist. Diese Schutzhaube kann beispielsweise einteilig oder auch mehrteilig ausgebildet sein. Zur Befestigung der Schutzhaube 11 können in den Randbereichen, z. B. im Schwellerbereich des Kraftfahrzeugs geeignete Befestigungselemente vorgesehen sein, wie z. B. Spanngurte, die an Verschlusselementen 18 angreifen. Alternativ oder zusätzlich können in Randbereiche der Schutzhaube beispielsweise Gummizüge eingearbeitet sein. Eine derartige Schutzhaube kann auch für andere Einsatzzwecke verwendet werden, z. B. wenn es darauf ankommt, Teile geschützt über größere Entfernungen zu transportieren, wie z. B. Maschinen.

Die Schutzhaube 11 ist vorzugsweise aus einem Material hergestellt, welches von außen nach Innen wasser-, schmutz- und ölundurchlässig ist, sowie von innen nach außen atmungsaktiv, also insbesondere luft-, wasserdampfdurchlässig und gegebenenfalls lichtdurchlässig ausgebildet ist. Beispielsweise wird die Schutzhaube 11 aus einem mit Polymeren beschichtetem Vlies nach DIN 6001 hergestellt. Als Polymere kommen z. B. in Betracht Polypropylen, Polyethylen, Polyethersulfone (PES), Polyamide, aber auch andere. Das Vlies kann auch mit Folien aus den vorgenannten Polymeren laminiert werden. Das Verbundmaterial wird aus einer oder mehreren Lagen Vliesstoff aus trockengelegten, synthetischen und/oder natürlichen und/oder halbsynthetischen Stapelfasern gefertigt. Bei einem mehrlagig aufgebauten Vliesstoffverbund kann ein Teil dieses Verbundes in Spinnvliestechnik hergestellt sein. Die Verfestigung des Vliesstoffes kann durch Nadeln, Wasserstrahltechnik oder thermisch oder eine Kombination dieser Verfahren erfolgen. Das Gewicht der Schutzhaube beträgt beispielsweise zwischen 30 und 180 g/m², die Dicke der Polymorbeschichtung beziehungsweise Folie 15 bis 200 µm. Das bevorzugte Material der Schutzhaube besteht aus Stapelfaservlies mit 70 % PES / 30 % Viskose und hat ein Gewicht von 80 g/m² verfestigt mit Wasserstrahltechnik. Beschichtet ist dieses Material mit 45 g/m² Polypropylen/Polyethylen.

Die unbeschichtete Seite des Materials der Schutzhaube zeigt zur Lackoberfläche bzw. zur schützenden Fläche und ist in ihrer Struktur und Eigenschaft so gewählt, dass keine Beschädigung der Oberfläche durch Windschlag, Reibung etc. entstehen kann. Dies wird dadurch möglich, dass die Festigkeit des Verbundmaterials der Schutzhaube maßgeblich von der polymeren Beschichtung übernommen wird. Gegenüber anderen bekannten Produkten hat dies den Vorteil, dass die Festigkeit in erster Linie von der Beschichtung und nicht vom Vlies bzw. Bändchengewebe übernommen wird. Dadurch ist eine Verlagerung der Anforderung "Festigkeit" vom Textil bzw. Träger der Polymerbeschichtung / Folie auf die Polymerbeschichtung selbst möglich, so dass der der Oberfläche zugewandte Textilstoff, also das Vlies in Bezug auf seine Eigenschaft "Welchheit / Kratzschutz" optimiert werden kann. Das Verbundmaterial bietet unter anderem Schutz gegen Funkenflug, ist see- bzw. salzwasserfest und UV-beständig für wenigstens neun Monate. Das Material hat vorzugsweise eine hohe "Anfangsfestigkeit", was den Vorteil hat, dass beim Transport von mit der Schutzhaube versehenen Fahrzeugen auf der Straße oder der Schiene der das Flattern der Schutzhaube auslösende erste Windschlag verringert wird. In Verbindung mit der weichen Innenseite der Haube ist damit ein schonenderer Transport gesichert.

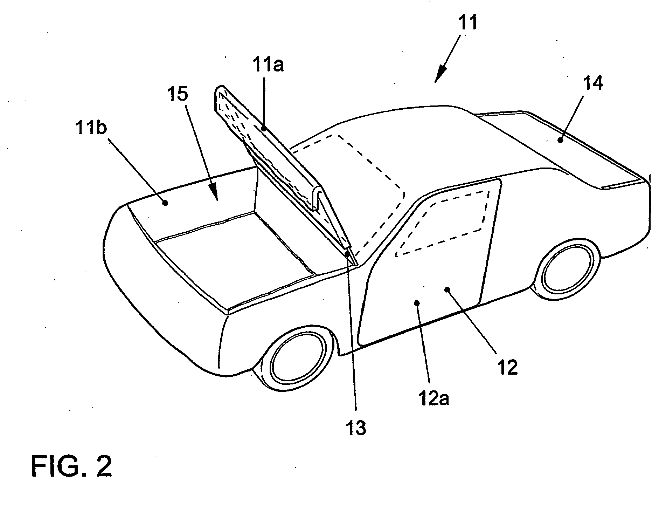

Um im Bereich beweglicher Anbauteile des Kraftfahrzeugs wie beispielsweise der Fahrzeugtüren 12, der Motorhaube 13 oder einer Kofferraum-Klappe oder Heck-Klappe 14 die Zugänglichkeit bei mit der Schutzhaube 11 bedecktem Kraftfahrzeug zu ermöglichen, sind für diese beweglichen Anbauteile separate Schutzumhüllungen vorgesehen, beispielsweise eine separate Schutzumhüllung 11 a für die Motorhaube, eine separate Schutzumhüllung 12a für die Fahrzeugtür etc. Diese separaten Schutzumhüllungen für die beweglichen Anbautelle sind nicht mit den übrigen Segmenten der Schutzhaube 11 verbunden. Für die Funktion der beweglichen Anbauteile, also zum Beispiel der Motorhaube 13 oder der Fahrzeugtür 12, ist es nicht erforderlich, zunächst einen reversiblen Verschluss zu öffnen, da die separate Schutzumhüllung 11a, 12a jeweils für sich unabhängig von der übrigen Schutzhaube 11 über das entsprechende bewegliche Bauteil, zum Beispiel die Motorhaube 13 oder die Fahrzeugtür 12 gezogen werden kann. Diese Funktion wird nachfolgend unter Bezugnahme auf Fig. 2 näher erläutert.

Fig. 2 zeigt das in Fig. 1 dargestellte Fahrzeug mit geöffneter Motorhaube 13. Die separate Schutzumhüllung 11a für die Motorhaube 13 ist hier zur besseren Verdeutlichung nur teilweise auf die Motorhaube 13 aufgezogen. Man sieht, dass diese separate Schutzumhüllung 11a nicht nur die bei geschlossener Motorhaube von außen sichtbare Oberseite der Motorhaube abdeckt, sondern die Motorhaube weitgehend vollständig umschließt, d.h. auch die Vorderkante und die Unterseite der Motorhaube. Diese separate Schutzumhüllung 11a hat also etwa eine Taschenform, die an den Umriß der Motorhaube 13 und deren Raumform angepasst ist. Dabei ist die Schutzumhüllung 11 a nur an einer Seite mit einer etwa schlitzartigen Öffnung versehen, so dass man sie über die Vorderkante der Motorhaube 13 schieben und dann auf die Motorhaube aufziehen kann. Durch diese quasi vollständige Umhüllung der Motorhaube 13, die bei aufgezogener Schutzumhüllung 11a auch bei geöffneter Motorhaube gegeben ist, ergibt sich der Vorteil, dass dann auch eine Verschmutzung beispielsweise der Unterseite der Motorhaube verhindert wird. Die unter der Motorhaube liegenden Bereiche 15 des Motorraums können von Foliensegmenten 11b der für die übrigen Bereiche des Fahrzeugs vorgesehenen Schutzhaube 11 abgedeckt werden, und sind dann bei geöffneter Motorhaube ebenfalls gegen Schmutz oder eindringendes Wasser geschützt. Dies wäre nicht der Fall, wenn man eine einteilige Schutzhaube verwenden würde mit beispielsweise im Bereich der Vorderkante und der seitlichen Begrenzungskanten verlaufenden Reißverschlüssen oder dergleichen. Dann wäre zwar nach dem Öffnen der Reißverschlüsse ebenfalls ein Öffnen der Motorhaube möglich. Die unter der Motorhaube liegenden Bereiche des Motorraums wären aber ebenso wie die Unterseite der Motorhaube dann nicht von einer Schutzhaube bedeckt und somit ungeschützt.

## Patentansprüche

1. Schutzhaube für Kraftfahrzeuge, Kraftfahrzeugteile oder Maschinen umfassend eine den Hauptteil des Objektes schützende Umhüllung und mindestens eine Schutzumhüllung für wenigstens ein an dem Objekt beweglich angebrachtes Bauteil, wobei die Schutzumhüllung (11a) für das bewegliche Bauteil (12, 13) eine von der Umhüllung (11) für den Hauptteil des Objekts separate Schutzumhüllung ist, **dadurch gekennzeichnet, dass** die Schutzumhüllung (11a) für das bewegliche Bauteil im montierten Zustand den überwiegenden Teil der Oberfläche des beweglichen Bauteils bedeckt, wobei wenigstens eine separate Schutzumhüllung (11a) für eine Motorhauben-Klappe vorgesehen ist und die unter einer Motorhaube liegenden Bereiche (15) eines Motorraums von Foliensegmenten (11b) der für die übrigen Bereiche des Fahrzeugs vorgesehenen Schutzhaube (11) abgedeckt werden.

2. Schutzhaube nach Anspruch 1, **dadurch gekennzeichnet, dass** wenigstens eine separate Schutzumhüllung (11a) für eine Kofferraum-Klappe (14), Heck-Klappe, oder Tür (12) vorgesehen ist.

3. Schutzhaube nach einem der vorhergehenden Ansprüche, **dadurch gekennzeichnet, dass** die separate Schutzumhüllung (11a) für das bewegliche Bauteil keine Verbindung zu der Umhüllung (11) für den Hauptteil des Objekts aufweist.

4. Schutzhaube nach einem der vorhergehenden Ansprüche, **dadurch gekennzeichnet, dass** die separate Schutzumhüllung (11a) für das bewegliche Bauteil (12, 13) auch im geschlossenen Zustand innenseitig liegende nicht sichtbare Oberflächenbereiche des beweglichen Bauteils bedeckt.

5. Schutzhaube nach einem der vorhergehenden Ansprüche, **dadurch gekennzeichnet, dass** die separate Schutzumhüllung (11a) mittels wenigstens eines Befestigungselements an dem beweglichen Bauteil (12, 13) festlegbar ist.

6. Schutzhaube nach Anspruch 5, **dadurch gekennzeichnet, dass** als Befestigungselement zur Anbringung der Schutzumhüllung (11a) an dem beweglichen Bauteil (12, 13) mindestens ein Gummizug vorgesehen ist.

7. Schutzhaube nach Anspruch 5 oder 6, **dadurch gekennzeichnet, dass** als Befestigungselement zur Anbringung der Schutzumhüllung (11a) an dem beweglichen Bauteil (12, 13) mindestens ein Haken, eine Schnur, ein Clip, eine Öse oder dergleichen vorgesehen ist, der (die) an dem beweglichen Bauteil anbringbar ist.

8. Schutzhaube nach einem der Ansprüche 1 bis 7, **dadurch gekennzeichnet, dass** die Schutzumhüllung (11a) zu deren Festlegung an dem beweglichen Bauteil (12, 13) wenigstens einen Klettverschluss aufweist.

9. Schutzhaube nach einem der Ansprüche 1 bis 8, **dadurch gekennzeichnet, dass** die Schutzumhüllung (11a) an dem beweglichen Bauteil (12, 13) so festlegbar ist, dass diese dessen Bewegungsfunktion nicht beeinträchtigt.

## Claims

1. Protective cover for motor vehicles, motor vehicle parts or machines, comprising a jacket which protects the main body of the object and comprising at least one protective jacket for at least one component that is movably attached to the object, wherein the protective jacket (11a) for the movable component (12, 13) is a protective jacket that is separate from the jacket (11) for the main body of the object, **characterized in that** the protective jacket (11a) for the movable component, when in the fitted state, covers the predominant part of the surface of the movable component, wherein at least one separate protective jacket (11a) is provided for an engine bonnet flap, and those regions (15) of an engine bay which are situated beneath an engine bonnet are covered by foil segments (11b) of the protective cover (11) that is provided for the other regions of the vehicle.

2. Protective cover according to Claim 1, **characterized in that** at least one separate protective jacket (11a) is provided for a luggage compartment flap (14), tailgate, or door (12).

3. Protective cover according to one of the preceding claims, **characterized in that** the separate protective jacket (11a) for the movable component does not have a connection to the jacket (11) for the main body of the object.

4. Protective cover according to one of the preceding claims, **characterized in that** the separate protective jacket (11a) for the movable component (12, 13) also covers surface regions of the movable component that are situated on the inside, and are not visible, when said movable component is in the closed state.

5. Protective cover according to one of the preceding claims, **characterized in that** the separate protective jacket (11a) can be fixed to the movable component (12, 13) by means of at least one fastening element.

6. Protective cover according to Claim 5, **characterized in that** at least one elastic band is provided as a fastening element for the attachment of the protective jacket (11a) to the movable component (12, 13).

7. Protective cover according to Claim 5 or 6, **characterized in that**, as a fastening element for the attachment of the protective jacket (11a) to the movable component (12, 13), there is provided at least one hook, one cord, one clip, one eyelet or the like, which can be attached to the movable component.

8. Protective cover according to one of Claims 1 to 7, **characterized in that** the protective jacket (11a) has at least one hook and loop fastener for the fixing thereof to the movable component (12, 13).

9. Protective cover according to one of Claims 1 to 8, **characterized in that** the protective cover (11a) can be fixed to the movable component (12, 13) so as not to impair the movement function of said movable component.

## Revendications

1. Housse de protection pour véhicules automobiles, parties de véhicules automobiles ou machines, comportant une enveloppe protégeant la partie principale de l'objet et au moins une enveloppe de protection pour au moins un composant monté mobile sur l'objet, l'enveloppe de protection (11a) pour le composant mobile (12, 13) étant une enveloppe de protection séparée de l'enveloppe (11) pour la partie principale de l'objet, **caractérisée en ce que**, dans l'état monté, l'enveloppe de protection (11a) pour le composant mobile recouvre la majeure partie de la surface du composant mobile, au moins une enveloppe de protection séparée (11a) pour une trappe de capot-moteur étant prévue et les régions (15), situées en dessous d'un capot-moteur, d'un compartiment-moteur étant recouvertes par des segments de feuille (11b) de la housse de protection (11) prévue pour les régions restantes du véhicule.

2. Housse de protection selon la revendication 1, **caractérisée en ce qu'**il est prévu au moins une enveloppe de protection séparée (11a) pour une trappe de compartiment à bagages (14), une trappe arrière ou une portière (12).

3. Housse de protection selon l'une quelconque des revendications précédentes, **caractérisée en ce que** l'enveloppe de protection séparée (11a) pour le composant mobile ne présente aucune liaison à l'enveloppe (11) pour la partie principale de l'objet.

4. Housse de protection selon l'une quelconque des revendications précédentes, **caractérisée en ce que** l'enveloppe de protection séparée (11a) pour le composant mobile (12, 13) recouvre également dans l'état fermé des régions de surfaces non visibles, situées du côté intérieur, du composant mobile.

5. Housse de protection selon l'une quelconque des revendications précédentes, **caractérisée en ce que** l'enveloppe de protection séparée (11a) peut être fixée au composant mobile (12, 13) au moyen d'au moins un élément de fixation.

6. Housse de protection selon la revendication 5, **caractérisée en ce qu'**il est prévu au moins une bande élastique en tant qu'élément de fixation pour attacher l'enveloppe de protection (11a) au composant mobile (12, 13).

7. Housse de protection selon la revendication 5 ou 6, **caractérisée en ce qu'**il est prévu au moins un crochet, un cordon, une attache, un oeillet ou similaire, qui peut être attaché(e) au composant mobile, en tant qu'élément de fixation pour attacher l'enveloppe de protection (11a) au composant mobile (12, 13).

8. Housse de protection selon l'une quelconque des revendications 1 à 7, **caractérisée en ce que** l'enveloppe de protection (11a) comprend au moins une fermeture autoagrippante pour sa fixation au composant mobile (12, 13).

9. Housse de protection selon l'une quelconque des revendications 1 à 8, **caractérisée en ce que** l'enveloppe de protection (11a) peut être fixée au composant mobile (12, 13), de telle sorte que celle-ci n'entrave pas sa fonction de déplacement.
